# NEUE EUROPÄISCHE PATENTSCHRIFT

(11) **EP 1 500 616 B2**
(45) Veröffentlichungstag und Bekanntmachung des Hinweises auf die Entscheidung über den Einspruch: **06.11.2013**
(45) Hinweis auf die Patenterteilung: 09.08.2006
(21) Anmeldenummer: 04013992.5
(22) Anmeldetag: 15.06.2004
(51) Int. Cl.: B65G 47/14, B65G 47/71, B65G 21/20, B65G 47/68

(54) **Vorrichtung und Verfahren zum automatischen Vereinzeln und Fördern von Werkstücken**
Device for and method of automatic separation and transport of workpieces
Dispositif et procédé de séparation et de transport automatiques des pièces

(30) Priorität: 21.07.2003 DE 10333235
(43) Veröffentlichungstag der Anmeldung: 26.01.2005
(73) Patentinhaber: Siemer, Michael, 49377 Vechta (DE)
(72) Erfinder: Siemer, Michael, 49377 Vechta (DE)
(74) Vertreter: Wasiljeff, Johannes M.B.

(56) Entgegenhaltungen:
- DE-A- 19 545 419
- DE-B- 1 004 103
- DE-B- 1 004 103
- DE-B- 1 182 597
- DE-B- 1 267 592
- DE-C1- 19 634 881
- DE-U- 20 119 177
- GB-A- 1 303 670

## Beschreibung

Die Erfindung betrifft eine Vorrichtung zum automatischen Vereinzeln und Fördern von Werkstücken, insbesondere von scheiben- oder ringförmigen Werkstücken aus starrem oder elastischem Material, mit einem Vorratsbehälter zur Bevorratung der Werkstücke, einer Fördereinrichtung zum Austrag der Werkstücke aus dem Vorratsbehälter und zum Fördern der Werkstücke entlang eines Förderweges und einer Linearisierungseinheit zum linearen Ausrichten der Werkstücke in einer Reihe, wobei die Linearisierungseinheit eine trichterartig geformte Kulisse aufweist.

Ferner betrifft die Erfindung ein Verfahren zum automatischen Vereinzeln und Fördern von derartigen Werkstücken mit einer derartigen Vorrichtung, wobei die Werkstücke in einem Vorratsbehälter bevorratet, die Werkstücke mittels einer Fördereinrichtung aus dem Vorratsbehälter ausgetragen und entlang des Förderweges gefördert und die Werkstücke mittels einer eine trichterartig geformte Kulisse aufweisenden Linearisierungseinheit in einer Reihe linear ausgerichtet werden.

DE 195 45 419 C2 zeigt eine derartige Vorrichtung zur Bereitstellung, Orientierung und Ordnung von Werkstücken. Bei dieser bekannten Vorrichtung werden sogenannte O-Ringe mittels eines Förderers einer Linearisierungseinheit zugeführt, in welcher die O-Ringe hintereinander ausgerichtet werden. Diese Linearisierungseinheit mündet in einem trichterförmig ausgebildeten Abschnitt, dessen Querschnittsabmessungen im Wesentlichen den Abmessungen der O-Ringe entsprechen.

Zur Vermeidung von Stauungen in der Linearisierungseinheit ist diese Linearisierungseinheit zweiteilig ausgebildet und in Förderrichtung bzw. quer zur Förderrichtung geteilt, wobei die einzelnen Teilungsabschnitte relativ zueinander bewegbar sind.

Nachteilig an dieser bekannten Vorrichtung ist jedoch, dass sich Stauungen nicht vollständig vermeiden lassen.

Der Erfindung liegt daher das Problem zugrunde, Stauungen im Bereich der Linearisierungseinheit im Wesentlichen vollständig zu vermeiden.

Die Erfindung löst dieses Problem mittels einer Vorrichtung gemäß Anspruch 1.

Ferner löst die Erfindung dieses Problem mittels eines Verfahrens gemäß dem nebengeordneten Verfahrensanspruch.

Die Erfindung sieht vor, in mehreren parallelen Bahnen jeweils eine Reihe von Werkstücken zu sammeln. Hierzu ist im Bereich des jeweiligen Bahnendes eine antreibbare Blockiereinrichtung vorgesehen.

Derartig gesammelte in einer Reihe vorliegende Werkstücke können sodann mit geringstmöglichem Abstand und daher mit höchster Effizienz in einer Reihe weiter gefördert werden, um beispielsweise in einer anschließenden Sortiereinheit sortiert zu werden.

Zur Vermeidung von Stauungen im Bereich der Bahnanfänge, die insbesondere dann auftreten können, wenn ein Werkstück mittig auf eine zwischen zwei Bahnen angeordnete Trennwand auftrifft, sind im Bereich der Bahnanfänge schwenkbar antreibbare Leitelemente vorgesehen, die derartige Stauungen durch eine Schwenkbewegung im Ansatz vermeiden. Selbst wenn ein Werkstück derart ungünstig eintrifft, dass es mittig auf ein Leitelement auftrifft, sorgt die Schwenkbewegung dieses Leitelements unmittelbar dafür, dass das Werkstück in einer anderen als einer mittigen Ausrichtung zum Leitelement zu liegen kommt und somit entweder rechts oder links am Leitelement vorbeigeführt wird.

Die Erfindung kann auf diese Weise Stauungen zuverlässig vermeiden.

Bei einer besonderen Ausführungsform ist in Förderrichtung nach der Linearisierungseinheit eine optische Prüfeinrichtung angeordnet zum Feststellen einer ordnungsgemäßen bzw. nicht-ordnungsgemäßen Ausbildung des jeweiligen Werkstücks. Dank dieser Prüfeinrichtung ist es möglich, in einer nachfolgenden Sortiereinheit ordnungsgemäße von nicht-ordnungsgemäßen Werkstücken zu trennen.

Bei einer besonderen Ausführungsform weist die Prüfeinrichtung eine erste oberhalb des Förderwegs angeordnete Zeilen- oder Matrixkamera und/oder eine zweite unterhalb des Förderwegs angeordnete Zeilen- oder Matrixkamera auf. Auf diese Weise kann das sich jeweils innerhalb der Prüfeinrichtung befindende Werkstück von beiden Seiten aus zuverlässig bewertet werden.

Bei einer besonderen Ausführungsform ist diese Prüfeinrichtung im Bereich eines zwischen zwei Förderern vorhandenen Schlitzes angeordnet. Diese Ausführungsform eignet sich besonders bei der Verwendung einer im Wesentlichen eindimensional ausgerichteten Zeilenkamera.

Bei einer anderen besonderen Ausführungsform ist die Prüfeinrichtung im Bereich einer Scheibe angeordnet, die zwischen Förderern angeordnet ist. Diese Ausführungsform eignet sich insbesondere bei Verwendung von zweidimensionalen Matrixkameras.

Bei einer weiteren besonderen Ausführungsform werden in der Sortiereinheit ordnungsgemäß ausgebildete Werkstücke durch Verschieben des Werkstücks quer zur Förderrichtung ausgeschleust, während nicht-ordnungsgemäße Werkstücke ohne Verschieben einem Ausschusssammelbehälter zugeführt werden. Der Vorteil dieser Ausführungsform liegt darin, dass in jedem Fall nur ordnungsgemäße Werkstücke ausgeschleust werden, nicht jedoch nicht-ordnungsgemäße Werkstücke. Sollte ausnahmsweise ein ordnungsgemäßes Werkstück nicht von dem Verschiebemechanismus erfasst werden, so verbleibt dieses Werkstück in seiner Bahn und wird dem Ausschusssammelbehälter zugeführt. Dies ist jedoch unkritisch, da bei dieser Fallkonstellation zwar ein ordnungsgemäß ausgebildetes Werkstück verloren geht, nicht jedoch ein nicht-ordnungsgemäßes Werkstück als ordnungsgemäß ausgeliefert wird, was regelmäßig zu sehr hohen Folgeschäden führt. Da es sich bei den Werkstücken regelmäßig um kostengünstige Massenartikel handelt, ist das fehlerhafte Ausschleusen eines ordnungsgemäßen Werkstücks als Ausschuss kein relevanter wirtschaftlicher Verlust.

Weitere vorteilhafte Ausführungsformen ergeben sich aus den Unteransprüchen sowie aus den anhand der beigefügten Zeichnung näher erläuterten Ausführungsbeispiele. In der Zeichnung zeigt:
- Figur 1: eine Vorrichtung gemäß einem Ausführungsbeispiel der Erfindung in einer seitlichen Ansicht und
- Figur 2: die Vorrichtung aus Figur 1 in einer Ansicht von oben.

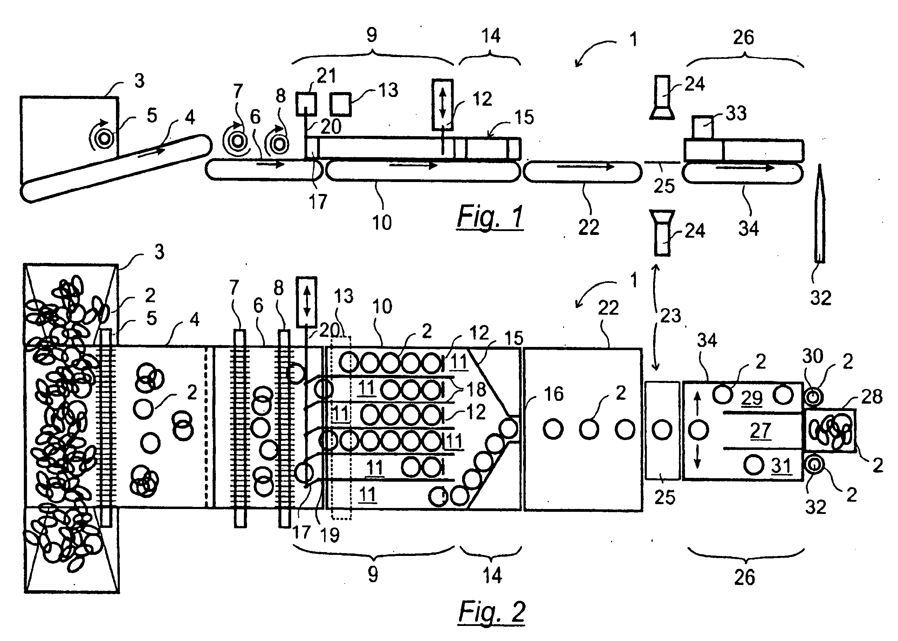

Die Figuren 1 und 2 zeigen eine Vorrichtung 1 zum automatischen Vereinzeln, Prüfen und Sortieren von Werkstücken und zwar insbesondere von elastischen Dichtungsringen, wie Lippendichtungsringen 2. Derartige Lippendichtungsringe 2 werden lose und daher im Chaos in einem Vorratsbehälter 3 bevorratet. Der Vorratsbehälter 3 ist so groß, dass er eine übliche Produktionscharge, nämlich die Füllung eines standardisierten Containers, insbesondere Gittercontainers, aufnehmen kann. Der Aufnahmebehälter 3 weist im unteren Bereich eine Öffnung auf, die auf einen schräg angeordneten ersten Förderer 4 einer Fördereinrichtung von insgesamt fünf Förderern führt. Dieser erste Förderer 4 befördert Lippendichtungsringe 2 in Förderrichtung schräg nach oben. Dabei werden aus dem losen Verbund Lippendichtungsringe 2 von dem ersten Förderer 4 mitgenommen. Da die Lippendichtungsringe 2 wegen ihrer physikalischen Konzeption, aber auch wegen ihrer Oberflächeneigenschaften dazu neigen, aneinander zu haften, wird zunächst mittels eines gegen die Richtung des ersten Förderers 4 drehbaren ersten Abweisers 5 eine erste Vorvereinzelung vorgenommen. Dieser erster Abweiser 5 ist in einer derartigen Höhe oberhalb des ersten Förderers 4 angeordnet, dass die Unterkante des ersten Abweisers 5 einen Abstand von der Oberseite des ersten Förderers 4 aufweist, der im Wesentlichen dem ein- bis vierfachen, insbesondere dem drei- bis vierfachen der Höhe eines Lippendichtungsrings 2 entspricht. Auf dem ersten Förderer 4 kommen daher Lippendichtungsringe 2 derart zu liegen, dass maximal vier Lippendichtungsringe 2 übereinanderliegen.

Die auf diese Weise vorsortierten Lippendichtungsringe 2 gelangen auf einen an den ersten Förderer 4 angrenzenden zweiten Förderer 6, dessen Anfang unterhalb des Endes des ersten Förderers 4 angeordnet ist. Die von dem ersten Förderer 4 geförderten Lippendichtungsringe 2 fallen daher auf den zweiten, waagerecht ausgerichteten Förderer 6 und treffen dort auf einen zweiten Abweiser 7 und einen dritten Abweiser 8, wobei der zweite Abweiser 7 in Förderrichtung vor dem dritten Abweiser 8 angeordnet ist. Der zweite Abweiser 7 dreht mit einer Drehgeschwindigkeit entgegen der Förderrichtung, die deutlich höher ist als die Drehgeschwindigkeit des dritten Abweisers 8. Zusätzlich oder alternativ sind diese Drehgeschwindigkeiten variabel einstellbar, insbesondere auch mit beliebigen Verhältnissen der Drehgeschwindigkeiten zueinander.

Der zweite Abweiser 7 ist in einer derartigen Höhe oberhalb des zweiten Förderers 6 angeordnet, dass lediglich zwei übereinanderliegende Lippendichtungsringe unterhalb des zweiten Abweisers 7 hindurchtreten können. Der dritte Abweiser ist in einer derartigen Höhe oberhalb des zweiten Förderers 6 angeordnet, dass nur noch ein Lippendichtungsring 2 unterhalb des dritten Abweisers 8 hindurchtreten kann. Zusätzlich oder alternativ sind die Abweiser 5, 7 und/oder 8 als starre oder bewegliche, insbesondere nichtrotierende, Blenden ausgebildet.

Die Abweiser 5, 7 und 8 sind als rotierende Bürsten bzw. Drehbesen ausgebildet, die jeweils im Bereich des Förderweges entgegengesetzt zur Förderrichtung drehen.

Aufgrund dieser Anordnung der Abweiser 5, 7 und 8 ist sichergestellt, dass den zweiten Förderer 6 Lippendichtungsringe 2 nur in einlagiger Form, d.h. nicht mehr übereinanderliegend verlassen.

Am Ende des zweiten Förderers 6 beginnt eine Verteilerstation 9, die sich über einen dritten Förderer 10 zumindest teilweise erstreckt. Diese Verteilerstation 9 weist mehrere parallele, in Förderrichtung ausgerichtete Bahnen 11 auf. Diese Bahnen 11 weisen eine Bahnbreite auf, die im Wesentlichen der Breite eines Lippendichtungsrings 2 entspricht, dabei jedoch geringfügig größer ist, so dass Lippendichtungsringe 2 entlang dieser Bahnen 11 gefördert werden können.

Am Ende einer jeden Bahn 11 befindet sich eine Blockiereinrichtung 12, mittels derer Lippendichtungsringe 2 bis zu einer vorbestimmten Anzahl aufgestaut werden können. Vorzugsweise handelt es sich bei den Blockiereinrichtungen 12 um betätigbare Pneumatikzylinder. Zusätzlich oder alternativ sind die Blockiereinrichtungen 12 vollständig oder teilweise als hydraulische und/oder elastische Stopper bzw. Blockiermittel ausgebildet.

Eine Blockiereinrichtung 12 wird geöffnet, wenn ein im Bereich des Anfangs einer Bahn angeordneter Sensor 13 detektiert, dass eine vorbestimmte Menge von Lippendichtungsringen 2 in der entsprechenden Bahn 11 vorhanden ist. Sobald die entsprechende Blockiereinrichtung 12 vollständig geöffnet ist, wird der Weg für eine Reihe von Lippendichtungsringen 2 freigegeben und diese gelangen in eine Linearisierungseinheit 14 mit einer im Wesentlichen trichterartig ausgebildeten Kulisse 15. Diese trichterartige Kulisse 15 weist eine zentrale Öffnung 16, mit einer Breite auf, die im Wesentlichen der Breite der Lippendichtungsringe 2 entspricht, dabei jedoch geringfügig größer ist, so dass die Lippendichtungsringe 2 ungehindert durch diese Öffnung 16 hindurchtreten können. Die Lippendichtungsringe 2 verlassen die Linearisierungseinheit 14 hintereinander in einer linearen Reihe von der Breite eines einzigen Lippendichtungsrings 2.

Die Verteilerstation 9 weist im Bereich der jeweiligen Anfänge der Bahnen 11 jeweils schwenkbar antreibbare Leitelemente 17 auf, mittels derer die Lippendichtungsringe 2 in die Bahnen 11. geleitet werden. Diese Leitelemente 17 sind Fortführungen von die Bahnen 11 trennenden Trennwände 18. Die Leitelemente 17 sind jeweils mittels eines Gelenks 19 mit der jeweiligen Trennwand 18 verbunden.

Die Leitelemente 17 sind über ein Verbindungsglied 20 miteinander und über dieses Verbindungsglied 20 mit einer Antriebseinrichtung 21 verbunden. Die Antriebseinrichtung 21 bewegt über das Verbindungsglied 20 die Leitelemente 17 im Wesentlich synchron und parallel hin und her. Hierdurch werden die Eingänge zu den Bahnen 11 ständig quer zur Förderrichtung hin und her verschoben. Hierdurch wird gewährleistet, dass etwaige Stauungen von Lippendichtungsringen 2 im Bereich der Eingänge der Bahnen 11 bereits im Ansatz aufgelöst werden.

Am Ende des dritten Förderers 10 treten die Lippendichtungsringe 2 durch die zentrale Öffnung 16 der trichterartigen Kulisse 15 mittig aus und gelangen auf einen vierten Förderer 22, der mit einer höheren Fördergeschwindigkeit betrieben wird, als der dritte Förderer 10. Daher werden die Abstände der Lippendichtungsringe 2 zueinander vergrößert. Beispielsweise beträgt die Fördergeschwindigkeit des vierten Förderers 22 2 Meter pro Sekunde, während die Fördergeschwindigkeit des dritten Förderers 10 1,6 Meter pro Sekunde und die Fördergeschwindigkeiten des ersten Förderers 4 und des zweiten Förderers 6 jeweils etwa 0,8 bis 1 Meter pro Sekunde betragen. Selbstverständlich sind abweichende Fördergeschwindigkeiten möglich. Die beispielhafte Angabe dieser Fördergeschwindigkeiten dient vorrangig dazu, die Abstufungen der Fördergeschwindigkeiten der verschiedenen Förderer zu veranschaulichen.

Der vierte Förderer 22 führt zu einer Prüfeinrichtung 23, die in dem dargestellten Ausführungsbeispiel zwei vorzugsweise als Matrixkameras ausgebildete Kameras 24 sowie eine Scheibe 25 aufweist. Der Sichtbereich der Kameras 24 ist derart gewählt, das wenigstens ein vollständiger Lippendichtungsring 2 von jeder der Kameras 24 erfasst und von einer mit den Kameras 24 verbundenen Steuereinrichtung ausgewertet werden kann. Diese Steuerungseinrichtung prüft, ob der jeweilige Lippendichtungsring ordnungsgemäß oder nicht-ordnungsgemäß ausgebildet ist. Ferner stellt diese Steuerungseinrichtung fest, wie ein Lippendichtungsring 2 ausgerichtet ist. Dies ist insbesondere dann vorteilhaft, wenn die Lippendichtungsringe 2 eine von einer Oberseite abweichende Unterseite aufweisen und die Lippendichtungsringe 2 für den Transport gleichsinnig ausgerichtet zu verpacken sind.

Die Lippendichtungsringe 2 werden sodann in eine Sortiereinheit 26 gefördert. Die Sortiereinheit 26 weist drei Bahnen auf, wobei eine mittlere Bahn 27 zur Förderung nicht-ordnungsgemäßer Lippendichtungsringe 2 zu einem Ausschusssammelbehälter 28 und eine erste äußere Bahn 29 zu einem ersten Aufnahmestift 30 zur Aufnahme von in einer ersten Richtung ausgerichteter Lippendichtungsringe 2 vorgesehen ist. Eine zweite äußere Bahn 31 führte zu einem zweiten Aufnahmestift 32 zur Aufnahme von in entgegengesetzter Richtung ausgerichteter Lippendichtungsringe 2.

Die Sortiereinrichtung 26 weist zum Verschieben der Lippendichtungsringe 2 in die äußeren Bahnen 29, 31 eine Schiebeeinrichtung 33 auf, die beispielsweise die Lippendichtungsringe 2 mit Druckluft auf dem fünften, der Sortiereinheit 26 zugeordneten Förderer 34 verschiebt.

Bei einem weiteren, nicht dargestellten Ausführungsbeispiel weist die Prüfeinrichtung 23 lediglich Zeilenkameras auf. Bei Verwendung derartiger Zeilenkameras befindet sich jeweils nur ein Teil eines Lippendichtungsrings 2 im Sichtfeld der jeweiligen Zeilenkamera. Derartige Kameras sind vorteilhaft in dem schmalen Verbindungsspalt zwischen dem vierten und fünften Förderer einsetzbar, so dass auf die in den Figuren dargestellte Scheibe 25 verzichtet werden kann.

## Patentansprüche

1. Vorrichtung zum automatischen Vereinzeln und Fördern von Werkstücken (2), insbesondere von scheiben- oder ringförmigen Werkstücken aus starrem und elastischem Material, mit
einem Vorratsbehälter (3) zur Bevorratung der Werkstücke (2),
einer Fördereinrichtung (4, 6, 10, 22, 34) zum Austrag der Werkstücke (2) aus dem Vorratsbehälter (3) und zum Fördern der Werkstücke (2) entlang eines Förderweges und
einer Linearisierungseinheit (14) zum linearen Ausrichten der Werkstücke (2) in einer Reihe,
wobei die Linearisierungseinheit (14) eine trichterartig geformte Kulisse (15) aufweist,
**gekennzeichnet durch**
(a) eine in Förderrichtung vor der Linearisierungseinheit (14) angeordnete Verteilerstation (9)
(b) mit mehreren parallelen Bahnen (11) mit im Wesentlichen der Werkstückbreite entsprechender Bahnbreite und
(c) jeweils einer antreibbaren Blockiereinrichtung (12) im Bereich des jeweiligen Bahnendes und
(d) mehreren an den jeweiligen Bahnanfängen angeordneten und um diese Bahnanfänge schwenkbar antreibbare Leitelemente (17) zum Leiten der Werkstücke in diese Bahnen (11) und
(e) einen im Bereich des jeweiligen Bahnanfangs angeordneten Sensor (13) zum Detektieren, ob die zugeordnete Bahn (11) mit einer vorbestimmten Menge von Werkstücken (2) befüllt ist.

2. Vorrichtung nach Anspruch 1,
**dadurch gekennzeichnet, dass**
die Bahnen (11) durch Trennwände (18) voneinander getrennt sind, wobei am dem jeweiligen Bahnanfang zugeordneten Ende einer Trennwand (18) jeweils ein Leitelement (17) mittels eines Gelenks (19) mit der Trennwand (18) verbunden ist.

3. Vorrichtung nach Anspruch 1 oder 2,
**dadurch gekennzeichnet, dass**
die Leitelemente (17) derart miteinander und mit einer Antriebseinrichtung (21) verbunden sind, dass sie im Wesentlichen synchron und parallel bewegbar sind.

4. Vorrichtung nach einem der vorhergehenden Ansprüche,
**dadurch gekennzeichnet, dass**
die Sensoren (13) und die Blockiereinrichtungen (12) mit einer Steuerungseinrichtung verbunden sind, welche die Blockiereinrichtungen (12) derart steuert, dass bei Detektion der vorbestimmten Menge von Werkstücken (2) innerhalb einer Bahn (11) die dieser Bahn (11) zugeordnete Blockiereinrichtung (12) geöffnet wird.

5. Vorrichtung nach einem der vorhergehenden Ansprüche,
**dadurch gekennzeichnet, dass**
in Förderrichtung nach der Linearisierungseinheit (14) eine optische Prüfeinrichtung (23) angeordnet ist zum Feststellen einer ordnungsgemässen bzw. nichtordnungsgemässen Ausbildung des jeweils geprüften Werkstücks (2).

6. Vorrichtung nach einem der vorhergehenden Ansprüche,
**dadurch gekennzeichnet, dass**
die Prüfeinrichtung (23) eine erste, oberhalb des Förderwegs angeordnete Zeilenoder Matrixkamera (24) und/oder eine zweite unterhalb des Förderwegs angeordnete Zeilen- oder Matrixkamera (24) aufweist.

7. Vorrichtung nach Anspruch 6,
**dadurch gekennzeichnet, dass**
die Prüfeinrichtung (23) im Bereich eines zwischen zwei Förderern (22, 34) angeordneten Schlitzes angeordnet ist.

8. Vorrichtung nach Anspruch 6,
**dadurch gekennzeichnet, dass**
die Prüfeinrichtung (23) eine zwischen zwei Förderern (22, 34) angeordnete Scheibe (25) aufweist und die Prüfeinrichtung (23) im Bereich dieser Scheibe (25) angeordnet ist.

9. Vorrichtung nach einem der Ansprüche 5 bis 8,
**dadurch gekennzeichnet, dass**
in Förderrichtung nach der Prüfeinrichtung (23) eine Sortiereinheit (26) angeordnet ist zum Trennen von ordnungsgemäss und nicht ordnungsgemäss ausgebildeten Werkstücken (2).

10. Vorrichtung nach Anspruch 9,
**dadurch gekennzeichnet, dass**
die Sortiereinheit (26) ordnungsgemäss ausgebildete Werkstücke (2) durch Verschieben dieser Werkstücke (2) mit einer Richtungskomponente quer zur Förderrichtung ausschleust, während nicht-ordnungsgemässe Werkstücke (2) ohne Verschieben einem Ausschusssammelbehälter (28) zugeführt werden.

11. Vorrichtung nach Anspruch 10,
**dadurch gekennzeichnet, dass**
die Sortiereinheit (26) drei Bahnen (27, 29, 31) aufweist, wobei die mittlere Bahn (27) zur Förderung nicht-ordnungsgemässer Werkstücke (2) zum Ausschusssammelbehälter (28) und eine erste der beiden äusseren Bahnen (29, 31) zu einem Aufnahmestift (30, 32) zur Aufnahme in einer ersten Richtung ausgerichteter Werkstücke (2) und eine zweite der beiden äusseren Bahnen (29, 31) zu einem Aufnahmestift (30, 32) zur Aufnahme in einer zweiten Richtung ausgerichteter Werkstücke (2) vorgesehen sind.

12. Vorrichtung nach einem der vorhergehenden Ansprüche,
**dadurch gekennzeichnet, dass**
die Fördereinrichtung (4, 6, 10, 22, 34) einen im Bereich des Vorratsbehälters beginnenden ersten Förderer (4) und eine erste Abweisevorrichtung (5) aufweist, wobei die erste Abweisevorrichtung (5) in einer derartigen Höhe oberhalb des ersten Förderers (4) angeordnet ist, dass eine erste Anzahl, beispielsweise ein bis vier, insbesondere drei oder vier, übereinanderliegende Werkstücke (2) unterhalb der ersten Abweisevorrichtung (5) hindurchtreten können.

13. Vorrichtung nach einem der vorhergehenden Ansprüche,
**dadurch gekennzeichnet, dass**
die Fördereinrichtung (4, 6, 10, 22, 34) einen dem ersten Förderer (4) nachfolgenden zweiten Förderer (6) und eine zweite (7) und eine dritte (8) Abweisevorrichtung aufweist, wobei die zweite Abweisevorrichtung (7) in einer derartigen Höhe oberhalb des zweiten Förderers (6) angeordnet ist, dass eine zweite Anzahl, beispielsweise zwei übereinanderliegender Werkstücke (2) unterhalb der zweiten Abweisevorrichtung (7) und die dritte Abweisevorrichtung (8) in einer derartigen Höhe oberhalb des zweiten Förderers (6) angeordnet ist, dass nur noch ein Werkstück (2) unterhalb der dritten Abweisevorrichtung (8) hindurchtreten kann.

14. Vorrichtung nach Anspruch 12 oder 13,
**dadurch gekennzeichnet, dass**
die erste, zweite und/oder dritte Abweisevorrichtung (5, 7, 8) im Bereich des Förderwegs entgegengesetzt zur Förderrichtung drehbare Bürsten bzw. Besen sind.

15. Vorrichtung nach einem der Ansprüche 12 bis 14,
**dadurch gekennzeichnet, dass**
die zweite Abweisevorrichtung (7) mit einer höheren Drehgeschwindigkeit als die dritte Abweisevorrichtung (8) antreibbar ist.

16. Verfahren zum automatischen Vereinzeln oder Fördern von Werkstücken (2), insbesondere von scheiben- oder ringförmigen Werkstücken (2) aus starrem oder elastischem Material, mit einer Vorrichtung (1) nach einem der Ansprüche 1 bis 15, wobei
Werkstücke (2) in einem Vorratsbehälter (3) bevorratet werden,
die Werkstücke (2) mittels einer Fördereinrichtung (4, 6, 10, 22, 34) aus dem Vorratsbehälter (3) ausgetragen und entlang eines Förderweges gefördert werden und die Werkstücke (2) mittels einer eine trichterartig geformte Kulisse (15) aufweisenden Linearisierungseinheit (14) in einer Reihe linear ausgerichtet werden,
**dadurch gekennzeichnet, dass**
(a) die Werkstücke (2) mittels einer in Förderrichtung vor der Linearisierungseinheit (14) angeordneten Verteilerstation (9) und
(b) mittels mehrerer an den jeweiligen Bahnanfängen angeordneten und um diese schwenkbar antreibbare Leitelemente (17) zum Leiten der Werkstücke (2)
(c) auf mehrere parallele Bahnen (11) mit im Wesentlichen der Werkstückbreite entsprechender Bahnbreite verteilt und
(d) in diesen Bahnen mittels jeweils antreibbarer Blockiereinrichtungen (12) im Bereich des jeweiligen Bahnendes gesammelt werden,
(e) wobei ein im Bereich des jeweiligen Bahnanfangs angeordneter Sensor (13) detektiert, ob die zugeordnete Bahn (11) mit einer vorbestimmten Menge von Werkstücken (2) befüllt ist.

## Claims

1. A device for automatically separating and transporting work pieces (2), particularly disk-shaped or ringshaped work pieces of rigid and elastic material, with a reservoir (3) for storing the work pieces (2),
a transport device (4, 6, 10, 22, 34) for withdrawing the work pieces (2) from the reservoir (3) and for transporting the work pieces (2) along a transport path, and
a linearizing unit (14) for linearly aligning the work pieces (2) in a row,
wherein the linearizing unit (14) features a connecting link (15) that is shaped in a funnel-like fashion,
**characterized in**
(a) a distributing station (9) that is arranged upstream of the linearizing unit (14) referred to the transport direction,
(b) wherein said distributing station features several parallel tracks (11) with a track width that essentially corresponds to the width of the work pieces,
(c) one respective driven blocking device (12) that is arranged in the region of the respective track end, and
(d) several guide elements (17) that are arranged at the respective track beginnings and can be driven such that they are pivoted about these track beginnings in order to guide the work pieces into the tracks (11) and
(e) a sensor (13) being arranged in the region of the respective track beginning and serving for detecting if the assigned track (11) is filled with a predetermined quantity of work pieces (2).

2. The device according to claim 1,
**characterized in that**
the tracks (11) are separated from one another by partition walls (18), wherein a guide element (17) is respectively connected to the partition wall (18) by means of a joint (19) at the end of the partition wall (18) that is assigned to the respective track beginning.

3. The device according to claim 1 or 2,
**characterized in that**
the guide elements (17) are connected to one another and to a drive unit (21) in such a way that they can be moved essentially synchronous and parallel to one another.

4. The device according to one of the preceding claims,
**characterized in that**
the sensors (13) and the blocking devices (12) are connected to a control unit that controls the blocking devices (12) in such a way that the blocking device (12) assigned to a track (11) is opened if it is detected that this track (11) contains the predetermined quantity of work pieces (2).

5. The device according to one of the preceding claims,
**characterized in that**
an optical inspection device (23) is arranged downstream of the linearizing unit (14) referred to the transport direction in order to determine the correct or incorrect construction of the respective work piece (2) being inspected.

6. The device according to one of the preceding claims,
**characterized in that**
the inspection device (23) features a first line scanning or matrix camera (24) that is arranged above the transport path and/or a second line scanning or matrix camera (24) that is arranged underneath the transport path.

7. The device according to claim 6,
**characterized in that**
the inspection device (23) is positioned in the region of a slot arranged between two conveyors (22, 34).

8. The device according to claim 6,
**characterized in that**
the inspection device (23) features a disk (25) that is arranged between two conveyors (22, 34), and **in that** the inspection device (23) is arranged in the region of this disk (25).

9. The device according to one of claims 5 to 8,
**characterized in that**
a sorting unit (26) is arranged downstream of the inspection device (23) referred to the transport direction in order to separate correctly and incorrectly constructed work pieces (2).

10. The device according to claim 9,
**characterized in that**
the sorting unit (26) sorts out correctly constructed work pieces (2) by displacing these work pieces (2) with a direction component transverse to the transport direction while incorrect work pieces (2) are transported to a collection container (28) for rejects without being displaced.

11. The device according to claim 10,
**characterized in that**
the sorting unit (26) features three tracks (27, 29, 31), wherein the center track (27) is provided for transporting incorrect work pieces (2) to the collection container (28) for rejects, wherein the first of the two outer tracks (29, 31) leads to a receiving pin (30, 32) for receiving work pieces (2) that are aligned in a first direction, and wherein the second of the two outer tracks (29, 31) leads to a receiving pin (30, 32) for receiving work pieces (2) that are aligned in a second direction.

12. The device according to one of the preceding claims,
**characterized in that**
the transport device (4, 6, 10, 22, 34) features a first conveyor (4) that begins in the region of the reservoir and a first guard (5), wherein the first guard (5) is arranged at such a height above the first conveyor (4) that a first quantity of work pieces (2) lying on top of one another, for example, one to four work pieces, particularly three or four work pieces, are able to pass underneath the first guard (5).

13. The device according to one of the preceding claims,
**characterized in that**
the transport device (4, 6, 10, 22, 34) features a second conveyor (6) that follows the first conveyor (4) as well as a second (7) and a third guard (8), wherein the second guard (7) is arranged at such a height above the second conveyor (6) that a second quantity of work pieces (2) lying on top of one another, for example, two work pieces, are able to pass underneath the second guard (7), and wherein the third guard (8) is arranged at such a height above the second conveyor (6) that only one work piece (2) is able to pass underneath the third guard (8).

14. The device according to claim 12 or 13,
**characterized in that**
the first, second and/or third guard (5, 7, 8) consist of brushes or brooms that are rotatable opposite to the transport direction in the region of the transport path.

15. The device according to one of claims 12 to 14,
**characterized in that**
the second guard (7) can be driven with a higher rotational speed than the third guard (8).

16. A method for automatically separating or transporting work pieces (2), particularly disk-shaped or ringshaped work pieces (2) of rigid or elastic material, by means of a device (1) according to one of Claims 1-15, wherein
the work pieces (2) are stored in a reservoir (3),
the work pieces (2) are withdrawn from the reservoir (3) by means of a transport device (4, 6, 10, 22, 34) and transported along a transport path, and
the work pieces (2) are linearly aligned in a row by means of a linearizing unit (14) that features a connecting link (15) shaped in a funnel-like fashion,
**characterized in that**
(a) the work pieces (2) are distributed by means of a distributing station (9) arranged upstream of the linearizing unit (14) referred to the transport direction and
(b) by means of several guide elements (17) for guiding the work pieces (2) that are arranged at the respective track beginnings and can be driven such that they are pivoted about these track beginnings,
(c) over several parallel tracks (11) with a track width that essentially corresponds to the width of the work pieces and
(d) **in that** the work pieces are collected in these tracks in the region of the respective track end by means of respective driven blocking devices (12),
(e) wherein a sensor (13) being arranged in the region of the respective track beginning, detects if the assigned track (11) is filled with a predetermined quantity of work pieces (2).

## Revendications

1. Dispositif d'individualisation et de transport automatique de pièces usinées (2), notamment de pièces usinées en forme de disques ou d'anneaux en matière rigide et élastique, comportant
un conteneur de réserve (1) pour stocker les pièces usinées (2),
un dispositif de transport (4, 6, 10, 22, 34)) pour extraire les pièces usinées (2) du conteneur de réserve (3) et pour transporter les pièces usinées (2) le long d'une voie de transport et
une unité de linéarisation (14) pour aligner linéairement les pièces usinées (2) en une rangée, l'unité de linéarisation (14) comportant une coulisse (15) conformée à la manière d'un entonnoir,
**caractérisé par**
(a) une station distributrice (9) disposée dans le sens de transport en amont de l'unité de linéarisation (14),
(b) comportant plusieurs bandes parallèles (11) d'une largeur de bande équivalant sensiblement à la largeur des pièces usinées et
(c) respectivement un dispositif de blocage actionnable (12) au niveau de l'extrémité respective de la bande et
(d) plusieurs éléments conducteurs (17) disposés aux débuts respectifs de la bande et actionnables en pivotement autour de ces débuts de bande pour diriger les pièces usinées dans ces bandes (11) et
(e) un capteur (13) disposé au niveau du début respectif de la bande et permettant de détecter si la bande associée (11) est remplie d'une quantité prédéfinie de pièces usinées (2).

2. Dispositif selon la revendication 1,
**caractérisé en ce que**
les bandes (11) sont séparées les unes des autres par des parois séparatrices (18), tandis qu'à l'extrémité associée au début respectif de la bande d'une paroi séparatrice (18), respectivement un élément conducteur (17) est relié à la paroi séparatrice (18) au moyen d'une articulation (19).

3. Dispositif selon la revendication 1 ou 2,
**caractérisé en ce que**
les éléments conducteurs (17) sont reliés entre eux et à un dispositif de propulsion (21) de manière à être mobiles sensiblement de manière synchrone et parallèlement.

4. Dispositif selon une des revendications précédentes,
**caractérisé en ce que**
les capteurs (13) et les dispositifs de blocage (12) sont reliés à un dispositif de commande qui commande les dispositifs de blocage (12) de manière à ce qu'en cas de détection de la quantité prédéfinie de pièces usinées(2) dans une bande (11), le dispositif de blocage (12) associé à cette bande (11) s'ouvre.

5. Dispositif selon une des revendications précédentes,
**caractérisé en ce que**,
dans le sens de transport, en aval de l'unité de linéarisation (14), est disposé un dispositif de contrôle optique (23) permettant de détecter une configuration conforme ou non conforme de la pièce usinée (2) respectivement contrôlée.

6. Dispositif selon une des revendications précédentes,
**caractérisé en ce que**
le dispositif de contrôle (23) comporte une première caméra à matrice ou à lignes (24) disposée au dessus de la voie de transport et/ou une deuxième caméra à matrice ou à lignes (24) disposée en dessous de la voie de transport.

7. Dispositif selon la revendication 6,
**caractérisé en ce que**
le dispositif de contrôle (23) est disposé au niveau d'une fente disposée entre deux convoyeurs (22, 34).

8. Dispositif selon la revendication 6,
**caractérisé en ce que**
le dispositif de contrôle (23) comporte un disque (25) disposé entre deux convoyeurs (22, 34) et le dispositif de contrôle (23) est disposé au niveau de ce disque (25).

9. Dispositif selon une des revendications 5 à 8,
**caractérisé en ce que**
dans le sens de transport, en aval du dispositif de contrôle (23), est disposée une unité de tri (26) permettant de séparer les pièces usinées (2) à configuration conforme et non conforme.

10. Dispositif selon la revendication 9,
**caractérisé en ce que**
l'unité de tri (26) éjecte les pièces usinées à configuration conforme (2) en décalant ces pièces usinées (2) à l'aide d'une composante d'orientation transversalement au sens de transport, tandis que les pièces usinées à configuration non conforme (2) sont acheminées sans décalage vers une cuve collectrice de rebut (28).

11. Dispositif selon la revendication 10,
**caractérisé en ce que**
l'unité de tri (26) présente trois bandes (27, 29, 31), la bande centrale (27) étant prévue pour transporter les pièces usinées non conformes (2) vers la cuve collectrice de rebut (28) et une première des deux bandes extérieures (29, 31) vers une tige réceptrice (30, 32) destinée à recevoir les pièces usinées (2) orientées dans un premier sens et une deuxième des deux bandes extérieures (29, 31) vers une tige réceptrice (30, 32) destinée à recevoir les pièces usinées (2) orientées dans un deuxième sens.

12. Dispositif selon une des revendications précédentes,
**caractérisé en ce que**
le dispositif de transport (4, 6, 10, 22, 34) présente un premier convoyeur (4) commençant au niveau du conteneur de réserve et un premier dispositif de rejet (5), le premier dispositif de rejet (5) étant disposé à une hauteur telle au dessus du premier convoyeur (4) qu'un premier nombre de pièces, par exemple un à quatre, notamment trois ou quatre, pièces superposées (2) peuvent passer sous le premier dispositif de rejet (5).

13. Dispositif selon une des revendications précédentes,
**caractérisé en ce que**
le dispositif de transport (4, 6, 10, 22, 34) présente un deuxième convoyeur (6) suivant le premier convoyeur (4) et un deuxième (7) et troisième (8) dispositif de rejet, le deuxième dispositif de rejet (7) étant disposé à une hauteur telle au dessus du deuxième convoyeur (6) qu'un deuxième nombre de pièces, par exemple deux pièces superposées (2), sont disposées en dessous du deuxième dispositif de rejet (7) et le troisième dispositif de rejet (8) est disposé à une hauteur telle au dessus du deuxième convoyeur (6) que seule une pièce usinée (2) peut alors passer en dessous du troisième dispositif de rejet (8).

14. Dispositif selon la revendication 12 ou 13,
**caractérisé en ce que**
le premier, deuxième et/ou troisième dispositif de rejet (5, 7, 8) sont des brosses ou des balais pouvant tourner au niveau de la voie de transport à l'inverse du sens de transport.

15. Dispositif selon une des revendications 12 à 14,
**caractérisé en ce que** le deuxième dispositif de rejet (7) peut être entraîné à une vitesse de rotation plus élevée que le troisième dispositif de rejet (8).

16. Procédé d'individualisation ou de transport automatique de pièces usinées (2), notamment de pièces usinées en forme de disques ou d'anneaux en matière rigide et élastique, à l'aide d'un dispositif (1) suivant une des revendications 1 à 15, dans lequel
des pièces usinées (2) sont stockées dans un conteneur de réserve (3),
les pièces usinées (2) sont extraites au moyen d'un dispositif de transport (4, 6, 10, 22, 34) du conteneur de réserve (3) et transportées le long d'une voie de transport et
les pièces usinées (2) sont alignées linéairement en une rangée au moyen d'unité de linéarisation (14) comportant une coulisse (15) conformée à la manière d'un entonnoir,
**caractérisé en ce que**
(a) les pièces sont distribuées au moyen d'une station distributrice (9) disposée dans le sens de transport en amont de l'unité de linéarisation (14) et
(b) au moyen de plusieurs éléments conducteurs (17) disposés aux débuts respectifs de la bande et pouvant être entraînés en pivotement autour de celle-ci et permettant de diriger les pièces usinées (2)
(c) sur plusieurs bandes parallèles (11) d'une largeur de bande équivalant sensiblement à la largeur des pièces usinées et
(d) rassemblées dans ces bandes au moyen de dispositifs de blocage respectivement actionnables (12) au niveau de l'extrémité respective de la bande,
(e) un capteur (13) disposé au niveau du début respectif de la bande détecte si la bande associée (11) est remplie d'une quantité prédéfinie de pièces usinées (2).
